# EUROPEAN PATENT SPECIFICATION

(11) **EP 3 020 465 B1**
(45) Date of publication and mention of the grant of the patent: **02.08.2017**
(21) Application number: 14193215.2
(22) Date of filing: 14.11.2014
(51) Int. Cl.: B01D 53/18, B01D 53/50, B01D 53/78

(54) **A flue gas purification device**
Rauchgasreinigungsvorrichtung
Dispositif de purification de gaz combustible

(43) Date of publication of application: 18.05.2016
(73) Proprietor: Doosan Lentjes GmbH, 40880 Ratingen (DE)
(72) Inventor: Kehrmann, Kai, 44629 Herne (DE); Karpinski, Andreas, 44285 Wuppertal (DE); Ziemann-Nöthe, Annette, 45136 Essen (DE)
(74) Representative: Becker, Thomas

(56) References cited:
- DE-A1- 2 848 386
- DE-A1-102006 007 502
- DE-A1-102006 036 954
- FR-A- 1 237 299
- GB-A- 1 137 853
- JP-A- H09 323 025
- US-A- 4 146 950
- US-A1- 2008 241 036

## Description

The invention relates to a flue gas purification device, in particular to a so-called wet flue gas purification device, as the flue gas is treated with a fluid absorbent, i.e. a liquid, in particular an alkaline liquid, such as seawater. DE 10 2006007502 A1 discloses a scrubber box for flue gas purification. The flue gas is injected via pipes into a liquid absorbent, present as a liquid bath in said scrubber box. A similar device is disclosed in DE 10 2006 036 954 A1. A further device of the prior art is disclosed in JP-A-09323025.

A wet flue gas purification device must be distinguished from a device operating with a slurry (like a limestone suspension) as an absorbing agent. The latter is disclosed, i. a., in WO96/00122. The flue gas is conducted through an apertured plate on which is provided a flowing layer of the absorbent limestone suspension. A similar device is disclosed in US 4,099,925. A flue gas purification device, wherein seawater is used as an absorbent liquid, is shown in EP 2644252A. This device comprises a scrubber tower (also called absorption tower), where flue gas and seawater are brought into contact. Thereafter the used seawater follows gravity and is collected in a sump-like area beneath the scrubber tower. According to EP2644252A1 the sump-like area may be a section of a flow-through channel for the seawater.

Apparently the flow through channel is not (necessarily) an integral part of the flue gas purification device its section below the scrubber tower is regarded as part of said device, as well with respect to prior art and the invention as described hereinafter.

A seawater based device and process has various advantages over a device and process operating with a limestone suspension as an absorbent for sulphur oxides within the flue gas, for example:
- the risk of blockages is considerably lower as a liquid absorbent like seawater comprises only very few solid constituents,
- seawater is cheaper,
- conditioning [german: Aufbereitung] of the used absorbent is much easier with seawater,
- any external disposal of the seawater may be omitted,
- the seawater may be returned into the ocean after re-adjusting its pH-value.

Nevertheless there is a continuous demand for improvements of such seawater based purification device and method. One key point insofar is the simplification of the overall construction, especially the scrubber tower and the contact zone of absorbent and flue gas.

It was now found that the advantages of a wet flue gas purification with seawater as an absorbent liquid may not only be kept but that further advantages may be achieved by a design of a flue gas purification device in accordance with claim 1.

The further advantages include:
The contact zone, where the absorbent liquid and flue gas are brought into contact (merged), is transferred from a scrubber tower above the sump area "into the sump area"; in other words: Flue gas and seawater are contacted within at least one section of the flow through channel, which channel further serves to transport the fresh seawater to the purification device and to transport used (spent) seawater from the purification device to subsequent treatment units and/or back into the sea.

Pipes and pumps (and corresponding energy) to transport the fresh seawater to a contact area in a scrubber tower may be avoided. The fresh absorbent may flow in a self-sufficient (autarkic) way along said flow-through channel toward the flue gas distributor, through and/or around said distributor and further on, all substantially in one common direction, corresponding to the longitudinal extension of the channel. To allow "self-flowing" of the absorbent in the channel the bottom of the channel may be slightly inclined to the horizontal.

Any nozzles to distribute the fresh seawater within a contact zone of a corresponding scrubber tower with the yet untreated flue gas may be omitted.

The contact zone is functionally provided by the flue gas distributor, which is arranged (submerged) within the seawater stream.

The spent seawater (after contact with the flue gas) with a much lower pH (for example in the range of 3-4) than the fresh seawater (for example in the range of 7-8), is contacted with additional fresh seawater (with its pH in the range of 7-8) immediately after said flue gas contact, namely by that part of the seawater stream, which did not get into direct contact with the flue gas, released by said distributor. Consequently the pH of the such seawater mixture increases again, so that any after-treatment, to bring the seawater back to or close to its original pH, becomes easier and requires less construction work. The invention allows to provide much more fresh seawater via said channel into the contact zone as a scrubber tower with spray nozzles and pumps to provide the spray nozzles with seawater may be avoided and correspondingly nearly no energy being necessary for the seawater stream. This "excess" of fresh seawater gives the further advantage that the relationship between seawater and gas (S/G) becomes remarkably higher and thus the SO₂ removal becomes much more efficient.

Devices according to EP 2644252A1 may be adapted (reconstructed) easily. The spray nozzles in the scrubber tower may be removed or kept as additional and/or auxiliary means to bring absorbent and flue gas together. They may also be used for a secondary treatment of the pre-purified flue gases on their way from the gas distributor (contact zone) via said gas-collector to a gas exit. The scrubber tower may be used as a flue gas collector and/or flue gas extractor.

As the absorbent liquid stream, flowing along said channel, is defined per se by its origin from the ocean, the flue gas distributor is an important component to achieve best purification results.

The flue gas distributor is arranged within the lotic absorbent. In principle it would be sufficient to let the flue gas escape from said distributor by any exit means into the surrounding liquid and insofar the design of the distributor seems at first glance of minor importance, but: to remove sulphur oxides, in particular SO₂, from the flue gas at its best, a large contact area between flue gas and liquid is desired. This can be achieved by transforming (splitting) the flue gas stream, entering the distributor, into individual small gas bubbles. In this respect it should be known, that an industrial flue gas purification device has a flue gas capacity of for example 1.000.000 to 3.000.000 m³/h and a fluid absorbent need of between 15.000 and 200.000m³/h.

The flue gas distributor may extend over a large horizontal area to allow the flue gas to enter into the fluid absorbent stream over a large surface area and thus to allow a high contact area between gas and absorbent. In a device with the capacity data mentioned above the distributor may have a size (length/width/height) of 2-30m each.

The flue gas distributor is designed such that the liquid absorbent (seawater) may flow through said flue gas distributor in a direction substantially corresponding to a main flow direction of the liquid absorbent along said flow-through channel before and after the contact space. In other words: The flue gas distributor is at least partially permeable to said fluid absorbent.

This "permeability" may be realized by openings in the outer walls of the distributor, especially in sections defining the (vertically) upper end as well as in sections adjacent thereto. In case of a cubic distributor all 6 wall sections (or 5 sections in case of a bottom free distributor) may be realized with such openings.

The openings may have any cross-section (shape), for example, rectangular, oval, circular. The number and size of the openings is dependent of the flue gas volumes fed into the distributor and which leave the distributor via these openings. Openings with a cross section between 1 and 15cm² each are regarded as effective to achieve a high contact area between flue gas and absorbent in such industrial purification device. Sieve-like wall sections fulfil the same requirements.

The flue gas entrance (inlet) of the flue gas distributor is arranged such that the flue gas enters the flue gas distributor in a substantially horizontal orientation. This allows low transportation costs for the gas and good distribution of the gas within the distributor. The flue gas may be fed via 1,2 or more inlet pipes into the distributor. Based on the capacity data mentioned the cross section of such an inlet duct may be around 5x10m.

To evenly distribute the untreated flue gas within the distributor a central position of entrance of the inlet duct(s) (with respect to the overall distributor design) is advantageous.

The flue gas distributor has walls sloping downwardly toward an outer rim of the flue gas distributor. This design gives the distributor a dome-like shape and allows to collect a larger gas volume within said dome space before the gas is released into the liquid via said openings.

The number and size of the openings as well as the total cross section of these openings per m² wall section may vary at different wall sections. In case of downwardly and outwardly sloping surfaces of the distributor the total cross section of the openings in the outer wall sections can be higher than in a central section to allow the larger flue gas volume beneath the outer wall sections to escape. In other words: the total cross section of the openings in a wall per square meter increases with increasing distance from a central point of the distributor, wherein central point refers to the geometrical centre.

These parameters (size, shape, number, cross section per area) can be combined in a way to allow a constant and steady performance of the purification device and the distributor respectively. In other words: the parameters may be adapted to achieve a constant and steady gas flow into the liquid over the respective distributor surfaces.

Not only for emergency cases, if the gas volume become unexpectedly high, it may be advantageous to use a distributor without a bottom, i.e. open toward the channel bottom, so that excess flue gas may escape the distributor by this way.

To allow a most even contact between liquid and gas a further embodiment of the purification device is characterized by guiding means within and/or along said distributor. As disclosed above, the liquid has one main flow direction in the channel, namely in the longitudinal direction of the channel. Accordingly the guiding means follow this longitudinal extension, i.e. they extend substantially parallel to the channel axis. The guiding means can be metal plates. The metal plates can be fixed at the distributor. The distributor can be made of metal, concrete or the like, withstanding the absorbent liquid and the flue gas.

While the fresh seawater absorbs SO₂ from the flue gas during its way through the liquid, flowing in the channel, the thus purified flue gas must be collected thereafter. Insofar the device includes a flue gas collector, arranged at a distance above the distributor to collect these gases and to lead them to subsequent installations like a mist eliminator, chimney, etc. Insofar the flue gas collector should project the distributor in a horizontal direction.

According to another embodiment the horizontal extension of the flue gas collector overlaps the distributor at least at its downstream end. This allows any remaining flue gas (or other gas/air) in the seawater to rise, to leave the seawater stream and to be collected as the main flue gas stream.

The lower end of the flue gas collector may be arranged above the liquid level in the channel or protrude into the channel fluid.

To allow a mostly continuous and steady flow of the liquid in the channel it may be of advantage to further install a weir-like body within the flow-through channel. By this weir the flow cross section for the fluid absorbent may be varied, especially if the weir is adjustable (e.g. moveable) relative to the cross section of the flow through channel.

Downstream said distributor the seawater mixture may be aerated before releasing the seawater stream into the ocean. Again: this aeration step may be effected within the flow-through channel in accordance with the contact step.

Further features of the invention derive from the sub-claims and the flowing description and drawing, disclosing schematically in
Figure 1 a side view of a flue gas purification device,
Figure 2 a top view of a flue gas distributor.

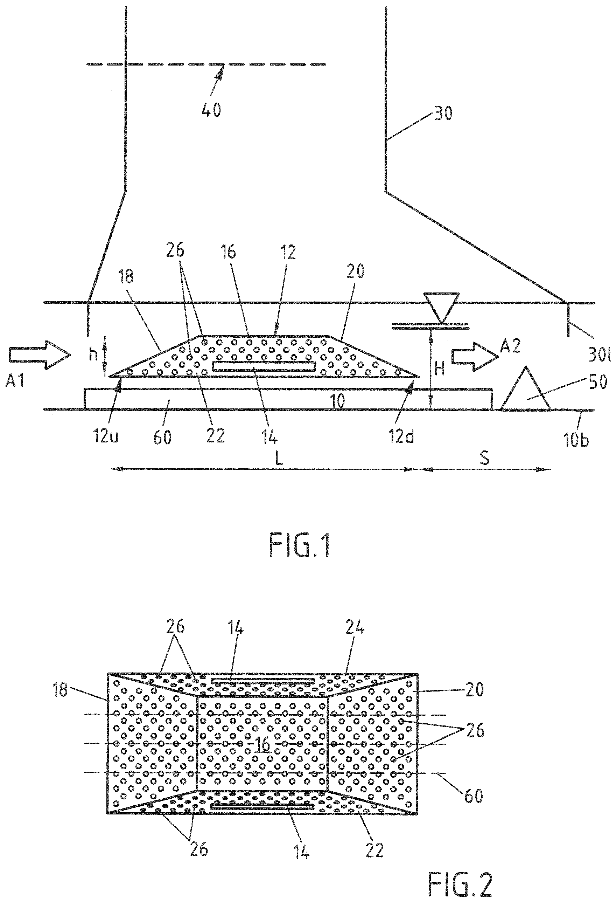

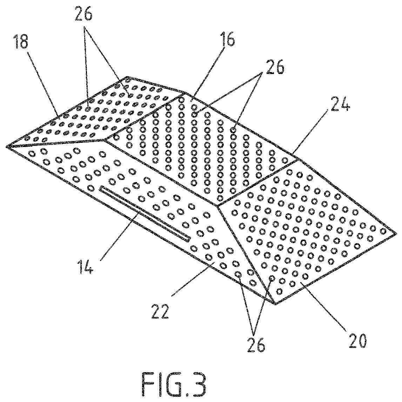

Figure 1 displays a flue gas purification device with the following features:
A horizontally extending flow-through channel 10 for a liquid absorbent, namely seawater. The part shown in Fig 1 is regarded as part of the flue gas purification device, while the downstream and upstream sections of the flow-through channel may be regarded as independent components. The seawater level within said channel 10 is symbolized by two parallel lines with a triangle on top.

A metallic flue gas distributor 12 is arranged (submerged) within the seawater along a longitudinal extension L of said flow-through channel 10 with a width W (not shown) and a height (bottom to liquid surface) H.

The flue gas distributor 12 has two flue gas inlets 14, arranged at opposing sides of the distributor 12 so that only one of said flue gas inlets (flue gas entrances) 14 can be seen in Figure 1.

The flue gas distributor 12 with its length L has a width (perpendicular to length L in a horizontal direction) which is slightly less than the corresponding width W of channel 10, while its height h is about half the height H of the liquid (seawater) within channel 10. The concrete data of the distributor are: L=20m, width = 10m, h=5m.

Flue gas distributor 12 is further characterized by a horizontally extending top plate 16, from which four wall sections extend outwardly and downwardly, characterized by numerals 18, 20, 22, 24 (Figure 2).

Top plate 16 and wall sections 18, 20, 22, 24 are permeable to the absorbent, flowing through said channel 10 from left to right (symbolized by arrows A1, A2). Permeability to gas and water is achieved by circular holes (openings) 26 in the said distributor walls 16, 18, 20, 22, 24, each of which with a diameter of 3cm. The number of openings 26 is calculated in accordance with the incoming flue gas volume, to allow the flue gas, entering the distributor 12 via inlets 14, to leave the distributor 12 via openings 26.

As shown in Figure 1 the flue gas distributor 10 is totally submerged into the absorbent liquid.

A flue gas collector 30 extends from channel 10 and overlaps the distributor 12 along all its periphery. The lower end 301 of gas collector 30 provides a gas seal by protruding into the liquid stream 11.

At its lower end, collector 30 overlaps the flue gas distributor 12 at its upstream end 12u as well at its downstream end 12d, wherein the overlap at said downstream end 12d is considerably larger than at its upstream end 12u.

This allows to provide a channel section 11 downstream of the downstream end 12d of distributor 12, which is covered by said collector 30 so that any remaining air/gas in the liquid stream will as well be collected by said collector 30.

Symbolized by a dotted line 40 is an optional feature of the device, namely the installation of spray nozzles by which further seawater may be sprayed into the collector space, although in most cases these additional spray nozzles may be omitted.

The purification process works as follows:
Fresh seawater is transported via channel 10 into a channel section below collector 30 (arrow 1).

As the distributor 12 has no bottom, the space, defined by top plate 16 and walls 18, 20, 22, 24, is filled with seawater, which passes channel 10.

The untreated (raw) flue gas enters distributor 12 via inlet ducts 14 and distributes within the space defined by top plate 16 and walls 18, 20, 22, 24 before leaving the distributor 12 via said openings 26 and flowing into the seawater absorbent outside said distributor 12.

Insofar the space within and around distributor 12 defines the contact zone between absorbing liquid (seawater) and flue gas.

The thus treated (contacted) flue gas rises further within the seawater before entering the collecting chamber 30 and before being further guided in subsequent installations like a chimney.

It becomes apparent from this description that only part of the seawater gets into contact with the flue gas. This leads to the advantage that immediately after said contact between flue gas and fresh seawater the then used (spent) seawater gets in further contact with fresh seawater and the corresponding seawater mixture leaves the distributor in a downstream direction.

Figure 1 further displays a weir-like installation 50, arranged on a bottom 10b of said channel 10, which weir is inflatable so that its vertical height may be adjusted according to the desired seawater flow through said channel 10.

Further downstream (not displayed in Figure 1) additional treatment steps like an aeration basin (as an individual component or as part of the flow through channel) may follow before the seawater is released into the ocean.

Figure 2 further displays guiding means 60 here: metal plates, extending in the flow direction of the absorbent in channel 10 and arranged below distributor 12 (alternatively or additionally above distributor 12) to support the flow direction of seawater.

## Claims

1. A flue gas purification device with the following features:
1.1a horizontally extending flow-through channel (10), suitable for transporting fresh seawater as a liquid absorbent to the purification device and for transporting the used liquid absorbent from the purification device to subsequent treatment units and/or back into a sea,
1.2a flue gas distributor (12) in said flow-through channel(10) such that it is submerged within the liquid absorbent along a longitudinal extension (L) of said flow-through channel (10), wherein
1.3the flue gas distributor (12) has at least one flue gas entrance (14) and numerous flue gas exits (26) and is designed such that the liquid absorbent may flow through said flue gas distributor (12), thereby providing a contact zone where the absorbent liquid and the flue gas are brought into contact, in a direction substantially corresponding to a main flow direction of the liquid absorbent along said flow-through channel (10) before and after the contact zone
1.4a flue gas collector (30), arranged at a distance vertically above the flue gas exits (26) of said flue gas distributor (12) and at a distance vertically above the fluid absorbent within the flow-through channel (10).

2. The flue gas purification device according to claim 1, wherein the flue gas entrance (14) of the flue gas distributor (12) is arranged such that the flue gas enters the flue gas distributor (12) in a substantially horizontal orientation.

3. The flue gas purification device according to claim 1, wherein the flue gas distributor (12) has walls sloping downwardly toward an outer rim of said flue gas distributor (12).

4. The flue gas purification device according to claim 1, wherein the flue gas distributor (12) has a dome-like shape.

5. The flue gas purification device according to claim 5, wherein the flue gas exits (26) of the flue gas distributor (12) are designed as discrete openings.

6. The flue gas purification device according to claim 6, wherein the total cross section of discrete openings (26) per square meter increases with increasing distance from the flue gas entrance (14).

7. The flue gas purification device according to claim 1, wherein the flue gas collector (30) horizontally extends above the flue gas distributor (12).

8. The flue gas purification device according to claim 1, wherein the flue gas collector (30) horizontally extends over the flue gas distributor (12).

9. The flue gas purification device according to claim 1, wherein the flue gas distributor (30) comprises guiding means (60), extending in the longitudinal direction of the flow-through channel (10) and at a distance to each other in a direction perpendicular to said longitudinal direction.

10. The flue gas purification device according to claim 1, wherein the flue gas distributor (12) is open at its vertical lower end.

11. The flue gas purification device according to claim 1, with at least one weir-like installation (50) within the flow-through channel (10) to reduce the flow cross section for the fluid absorbent, flowing along the flow-through channel (10).

## Patentansprüche

1. Rauchgasreinigungsvorrichtung mit folgenden Merkmalen:
1.1 einem horizontal verlaufenden Durchflusskanal (10), der zum Transport von frischem Seewasser als flüssiges Absorbens zur Reinigungsvorrichtung geeignet ist und zum Transport des verbrauchten flüssigen Absorbens von der Reinigungsvorrichtung zu nachgeschalteten Behandlungseinheiten und/oder zurück ins Meer,
1.2 einem Rauchgasverteiler (12) im Durchflusskanal (10) derart, dass er im flüssigen Absorbens in Längsrichtung (L) des Durchflusskanals (10) eintaucht, wobei
1.3 der Rauchgasverteiler (12) wenigstens einen Rauchgaseingang (14) und mehrere Rauchgasauslässe (26) aufweist und so gestaltet ist, dass das flüssige Absorbens durch den Rauchgasverteiler (12) fließen kann und dabei eine Kontaktzone bereitstellt, in der das flüssige Absorbens und das Rauchgas in Kontakt gebracht werden, und zwar in einer Richtung, die im Wesentlichen einer Hauptfließrichtung des flüssigen Absorbens entlang des Durchflusskanals (10) vor und hinter der Kontaktzone entspricht,
1.4 einem Rauchgassammler (30), der mit vertikalem Abstand oberhalb der Rauchgasauslässe (26) des Rauchgasverteilers (22) und mit vertikalem Abstand oberhalb des flüssigen Absorbens im Durchflusskanal (10) angeordnet ist.

2. Rauchgasreinigungsvorrichtung nach Anspruch 1, wobei der Rauchgaseingang (14) des Rauchgasverteilers (12) so angeordnet ist, dass das Rauchgas in einer im Wesentlichen horizontalen Orientierung in den Rauchgasverteiler (12) eintritt.

3. Rauchgasreinigungsvorrichtung nach Anspruch 1, wobei der Rauchgasverteiler (12) Wände hat, die sich abwärts in Richtung auf eine äußere Kante des Rauchgasverteilers (12) neigen.

4. Rauchgasreinigungsvorrichtung nach Anspruch 1, wobei der Rauchgasverteiler eine domähnliche Form aufweist.

5. Rauchgasreinigungsvorrichtung nach Anspruch 5, wobei die Rauchgasauslässe (26) des Rauchgasverteilers (12) als diskrete Öffnungen gestaltet sind.

6. Rauchgasreinigungsvorrichtung nach Anspruch 6, wobei die gesamte Querschnittsfläche der diskreten Öffnungen (26) pro Quadratmeter mit größer werdendem Abstand vom Rauchgaseingang (14) steigt.

7. Rauchgasreinigungsvorrichtung nach Anspruch 1, wobei der Rauchgassammler (30) sich horizontal über den Rauchgasverteiler (12) erstreckt.

8. Rauchgasreinigungsvorrichtung nach Anspruch 1, wobei der Rauchgassammler (30) sich horizontal über den Rauchgasverteiler (12) erstreckt.

9. Rauchgasreinigungsvorrichtung nach Anspruch 1, wobei der Rauchgasverteiler (30) Führungsmittel (60) aufweist, die sich in Längsrichtung des Durchflusskanals (10) erstrecken und mit einem Abstand zueinander in einer Richtung senkrecht zur Längsrichtung.

10. Rauchgasreinigungsvorrichtung nach Anspruch 1, wobei der Rauchgasverteiler (12) an seinem vertikal unteren Ende offen ist.

11. Rauchgasreinigungsvorrichtung nach Anspruch 1, mit mindestens einer wehrartigen Einrichtung (50) innerhalb des Durchflusskanals (10), um den Durchflussquerschnitt für das flüssige Absorbens, das durch den Durchflusskanal (10) fließt, zu reduzieren.

## Revendications

1. Dispositif de purification de gaz de combustion possédant les caractéristiques suivantes :
1.1 un canal d'écoulement (10) s'étendant de manière horizontale, adapté pour le transport d'eau de mer fraîche en tant qu'absorbant liquide vers le dispositif de purification et pour le transport de l'absorbant liquide usé à partir du dispositif de purification vers des unités de traitement subséquentes et/ou pour le rejet à la mer,
1.2 un distributeur de gaz de combustion (12) dans ledit canal d'écoulement (10) de sorte qu'il soit submergé à l'intérieur de l'absorbant liquide le long d'une extension longitudinale (L) dudit canal d'écoulement (10), dans lequel
1.3 le distributeur de gaz de combustion (12) possède au moins une entrée de gaz de combustion (14) et de nombreuses sorties de gaz de combustion (26) et est conçu de sorte que l'absorbant liquide puisse s'écouler à travers ledit distributeur de gaz de combustion (12), fournissant ainsi une zone de contact dans laquelle le liquide absorbant et le gaz de combustion sont placés en contact, dans une direction correspondant substantiellement à une direction principale d'écoulement de l'absorbant liquide le long dudit canal écoulement (10) avant et après la zone de contact
1.4 un collecteur de gaz de combustion (30), agencé à une distance de manière verticale au-dessus des sorties de gaz de combustion (26) dudit distributeur de gaz de combustion (12) et à une distance de manière verticale au-dessus de l'absorbant liquide à l'intérieur du canal d'écoulement (10).

2. Dispositif de purification de gaz de combustion selon la revendication 1, dans lequel l'entrée de gaz de combustion (14) du distributeur de gaz de combustion (12) est agencée de sorte que le gaz de combustion entre dans le distributeur de gaz de combustion (12) selon une orientation substantieillement horizontale.

3. Dispositif de purification de gaz de combustion selon la revendication 1, dans lequel le distributeur de gaz de combustion (12) possède des murs inclinés vers le bas en direction d'une bordure périphérique dudit distributeur de gaz de combustion (12).

4. Dispositif de purification de gaz de combustion selon la revendication 1, dans lequel le distributeur de gaz de combustion (12) possède une forme de type dôme.

5. Dispositif de purification de gaz de combustion selon la revendication 5, dans lequel les sorties de gaz de combustion (26) du distributeur de gaz de combustion (12) sont conçues comme des ouvertures distinctes.

6. Dispositif de purification de gaz de combustion selon la revendication 6, dans lequel la section transversale totale des ouvertures distinctes (26) par mètre carré augmente avec l'augmentation de la distance à partir de l'entrée de gaz de combustion (14).

7. Dispositif de purification de gaz de combustion selon la revendication 1, dans lequel le collecteur de gaz de combustion (30) s'étend de manière horizontale au-dessus du distributeur de gaz de combustion (12).

8. Dispositif de purification de gaz de combustion selon la revendication 1, dans lequel le collecteur de gaz de combustion (30) s'étend de manière horizontale sur le distributeur de gaz de combustion (12).

9. Dispositif de purification de gaz de combustion selon la revendication 1, dans lequel le distributeur de gaz de combustion (30) comprend des moyens de guidage (60), s'étendant dans la direction longitudinale du canal d'écoulement (10) et à une distance dans une direction perpendiculaire par rapport à ladite direction longitudinale.

10. Dispositif de purification de gaz de combustion selon la revendication 1, dans lequel le distributeur de gaz de combustion (12) est ouvert au niveau de son extrémité inférieure verticale.

11. Dispositif de purification de gaz de combustion selon la revendication 1, possédant au moins une installation de type déversoir (50) à l'intérieur du canal d'écoulement (10) pour réduire la section transversale d'écoulement pour l'absorbant liquide, s'écoulant le long du canal d'écoulement (10).
